# EUROPEAN PATENT APPLICATION

(11) **EP 4 851 492 A1**
(43) Date of publication of application: **09.12.2026**
(21) Application number: 25748925.2
(22) Date of filing: 30.01.2025
(51) Int. Cl.: F16H 25/22, F16H 25/24

(54) **FEED SCREW DEVICE**

(30) Priority: 02.02.2024 JP 2024014894
(71) Applicant: NSK Ltd., Tokyo 141-8560 (JP)
(72) Inventor: KAWASAKI, Daina, Fujisawa-shi, Kanagawa 251-8501 (JP)
(74) Representative: Grünecker Patent- und Rechtsanwälte PartG mbB
(86) International application number: PCT/JP2025/003118
(87) International publication number: WO 2025/164746

(57) **Abstract**

The present invention comprises a ball screw provided with a threaded shaft and a nut, a pair of intermediate supports positioned so as to be vertically movable around the threaded shaft, a pair of frame bodies respectively attached to the pair of intermediate supports and connected by a connection member, a linear-motion guiding part having a pair of outer cylinders which pass through the shaft and to which the pair of frame bodies are respectively attached, and a pair of buffer devices. The nut has a state in which the nut comes into contact with the intermediate support or the frame body positioned above and moves in the vertical direction together with the pair of intermediate supports and the pair of frame bodies, and a state in which the nut is not in contact with the intermediate support or the frame body positioned above.

## Description

### TECHNICAL FIELD

The present invention relates to a feed screw device.

### BACKGROUND ART

As a rotational speed of a ball screw increases, a frequency of a screw shaft approaches a natural frequency, causing the screw shaft to resonate and vibrate violently. The rotational speed of the ball screw at this time is referred to as a critical speed, which is inversely proportional to a square of a support interval of the screw shaft, and thus a shorter support interval of the screw shaft is usually preferred.

As a countermeasure against the resonance, it is known that two intermediate supports arranged with a slight clearance from the screw shaft are attached between bearings supporting two end portions of the screw shaft and a nut (for example, see Patent Literature 1). When the ball screw starts to vibrate beyond the critical speed, the screw shaft comes into contact with the intermediate supports and the support interval is shortened, making it possible to increase an upper limit of the rotational speed under specified conditions.

Patent Literature 1 discloses a configuration of a feed screw support device in which a linear guide device provided parallel to a screw shaft extending in a horizontal direction is provided between bearings at two end portions of the screw shaft, and a pair of intermediate supports that receive a radial load of the screw shaft and engage with a nut to be interlocked in a screw shaft direction are attached to a slider of the linear guide device.

### CITATION LIST

### PATENT LITERATURE

Patent Literature 1: JPH02-004736U

### SUMMARY OF INVENTION

### TECHNICAL PROBLEM

However, when the feed screw device described in Patent Literature 1 is applied to a ball screw in which a screw shaft extends in a vertical direction, the intermediate supports cannot be supported from below by the slider, and thus the nut that moves upward from a center in an axial direction of the screw shaft lifts the intermediate supports and the slider and the load increases, the intermediate supports cannot move in coordination with the nut in appropriate positions when a support interval of the ball screw is large, and an effect of preventing resonance may not be sufficiently exhibited.

The present invention is made in view of the above-described problems, and an object of the present invention is to provide a feed screw device that can restrict resonance and increase an upper limit of a critical speed in specifications in which a screw shaft extends in a vertical direction.

### SOLUTION TO PROBLEM

The above object of the present invention is implemented by following configurations.
[1] A feed screw device including:
   a ball screw that includes a screw shaft, the screw shaft extending in a vertical direction and having two end portions thereof rotatably supported by an upper base portion and a lower base portion via bearings, and a nut screwed to the screw shaft via balls;
   a pair of intermediate supports located on two sides of the nut in an up-down direction, movable up and down around the screw shaft, and configured to come into contact with the screw shaft;
   a pair of frame bodies respectively attached to the pair of intermediate supports between the upper base portion and the lower base portion, and coupled by a coupling member;
   linear movement guide portions that a shaft attached to the upper base portion and the lower base portion penetrates and have a pair of outer tubes to which the pair of frame bodies are respectively attached; and
   a pair of buffer devices respectively provided between the upper base portion and the frame body located above and between the lower base portion and the frame body located below,
   in which the nut has a state in which the nut is in contact with the intermediate support or the frame body which is located above and moves in the up-down direction together with the pair of intermediate supports and the pair of frame bodies, and a state in which the nut is not in contact with the intermediate support or the frame body which is located above.

### ADVANTAGEOUS EFFECTS OF INVENTION

According to the feed screw device of the present invention, in specifications in which the screw shaft extends in the vertical direction, even when a support interval of the ball screw is large, an upper limit of a critical speed can be increased without resonance.

### BRIEF DESCRIPTION OF DRAWINGS

FIG. 1 is an overall view of a feed screw device, showing a resonance prevention device in a first state.
FIG. 2 is an overall view of the feed screw device, showing the resonance prevention device in a second state.
FIG. 3 is a central cross-sectional view showing an intermediate support.
FIG. 4 shows a feed screw device according to a second embodiment.

### DESCRIPTION OF EMBODIMENTS

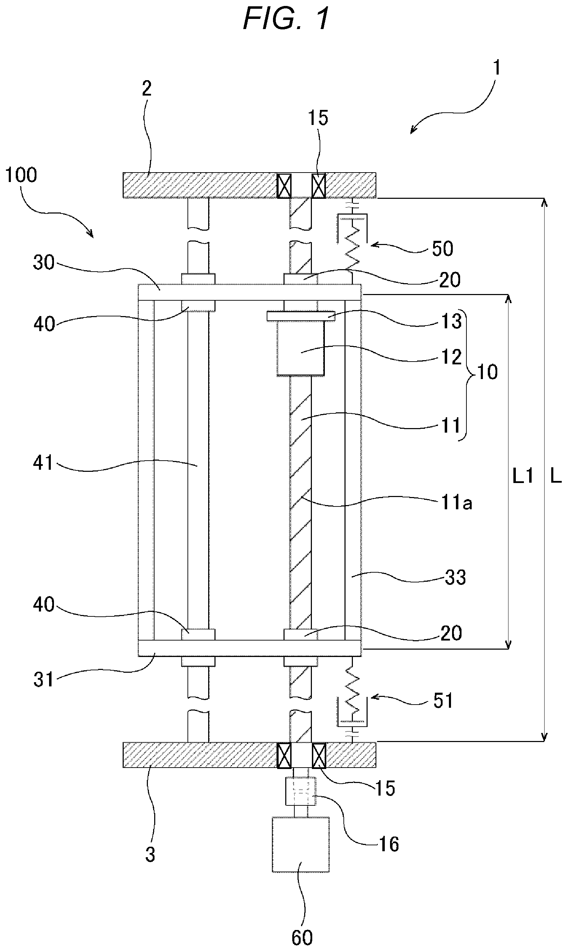

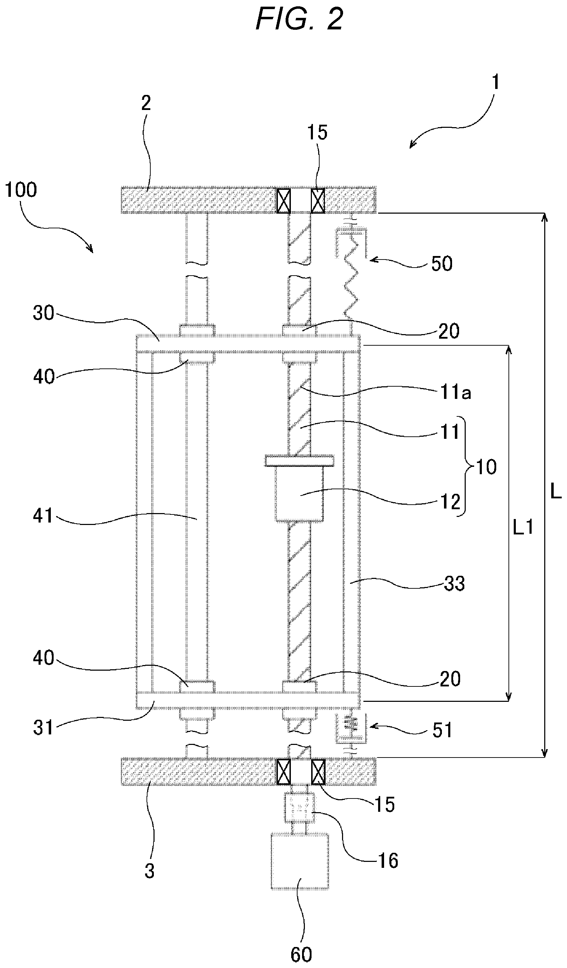

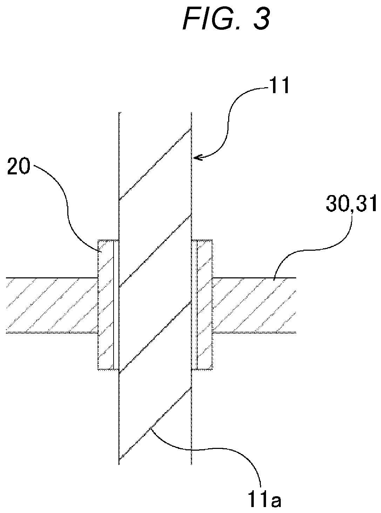

Hereinafter, a feed screw device according to an embodiment of the present invention will be described in detail with reference to the drawings. FIG. 1 is an overall view of the feed screw device, showing a resonance prevention device in a first state. FIG. 2 is an overall view of the feed screw device, showing the resonance prevention device in a second state. FIG. 3 is a central cross-sectional view showing an intermediate support.

### (First Embodiment)

As shown in FIGS. 1 and 2, a feed screw device 1 according to the first embodiment includes an upper base plate 2 (upper base portion), a lower base plate 3 (lower base portion), a ball screw 10 having two end portions supported by the upper base plate 2 and the lower base plate 3, and a resonance prevention device 100 that restricts resonance of the ball screw 10.

As shown in FIG. 1, the ball screw 10 has the two end portions rotatably supported by bearings 15, and includes a screw shaft 11 that extends in a vertical direction and has a spiral screw groove 11a in an outer peripheral surface, a nut 12 that has a spiral screw groove (not shown) corresponding to the screw groove 11a of the screw shaft 11 in an inner peripheral surface, a plurality of balls (not shown) that roll in a load raceway defined by the screw groove 11a of the screw shaft 11 and the screw groove of the nut 12, and a seal member (not shown) that seals a clearance between the screw shaft 11 and the nut 12.

A drive motor 60 that drives the screw shaft 11 via a coupling 16 such that the screw shaft 11 is rotatable is provided at an end portion (lower end in the shown example) of the screw shaft 11.

The nut 12 is provided with, on an outer peripheral surface thereof, a plurality of circulation components (not shown) each penetrating the nut 12 such that two end portions thereof enter and come out of the load raceway and each including a scooping portion that scoops the balls. Accordingly, the balls scooped at one end portion of the load raceway pass through an inside of the circulation components and return to another end portion of the load raceway, thereby implementing an endless circulation path.

The nut 12 is formed with a flange portion 13 on one end portion side in an axial direction. The flange portion 13 is fixed to a movable table and the like of a mechanical device, which is not shown, by an attachment bolt and the like.

As described above, the ball screw 10 can move the nut 12 (and the movable table and the like provided on the nut 12) in an up-down direction along the screw shaft 11 by axially rotating the screw shaft 11 by the drive motor 60.

### (Resonance Prevention Device)

The resonance prevention device 100 includes a pair of intermediate supports 20, 20 located on two sides of the nut 12 in the up-down direction and movable up and down around the screw shaft 11, a pair of frame bodies 30, 31 attached to the pair of intermediate supports 20, 20, respectively, linear movement guide portions 40 that guide the up-down movement of the intermediate supports 20, and a pair of buffer devices 50, 51 provided on the upper base plate 2 and the lower base plate 3, respectively.

The intermediate supports 20 are tubular members externally mounted on the screw shaft 11 extending in the up-down direction, and a pair of intermediate supports 20 are provided on two sides in the up-down direction of the nut 12 that moves along the screw shaft 11. As shown in FIG. 3, the intermediate supports 20 are attached to the frame bodies 30, 31 extending in a horizontal direction.

As shown in FIG. 3, the intermediate supports 20 are each formed in a cylindrical shape having an inner diameter slightly larger than an outer diameter of the screw shaft 11. Accordingly, the intermediate supports 20 move up and down along the screw shaft 11 in a state in which a slight clearance is defined between inner peripheral surfaces of the intermediate supports 20 and the outer peripheral surface of the screw shaft 11 inserted through the intermediate supports 20.

On the other hand, when the screw shaft 11 resonates by a predetermined amplitude or more, the inner peripheral surfaces of the intermediate supports 20 come into contact with the outer peripheral surface of the screw shaft 11, and thereby vibration of the screw shaft 11 can be suppressed by the intermediate supports 20.

The intermediate supports 20 are guide bushes with which the outer peripheral surface of the resonating screw shaft 11 may come into contact, and are formed of an oil-resistant synthetic resin. The guide bushes constituting the intermediate supports 20 are not limited to a synthetic resin, and may be formed of a low friction material such as a self-lubricating metal and an oil-containing metal.

The pair of frame bodies 30, 31 are plate-shaped members extending in the horizontal direction and having planes orthogonal to the screw shaft 11, and the screw shaft 11 extending in the vertical direction and a shaft 41 described later are inserted therethrough. Similar to the intermediate supports 20, the pair of frame bodies 30, 31 are provided on two sides of the nut 12 in the up-down direction.

The intermediate supports 20 through which the screw shaft 11 is inserted and the linear movement guide portions 40 through which the shaft 41 is inserted are attached and fixed to the frame bodies 30, 31 to be fitted thereto, and thereby the intermediate supports 20 and the linear movement guide portions 40 are arranged side by side in the horizontal direction.

The pair of upper and lower frame bodies 30, 31 are coupled by a coupling member 33 extending in the up-down direction. Accordingly, an interval in the up-down direction between the pair of upper and lower intermediate supports 20, 20 attached to the pair of upper and lower frame bodies 30, 31 (also referred to as an inter-fulcrum distance L1 for suppression) is always kept constant. This configuration may be described with reference to FIGS. 1 to 3.

In addition, the pair of frame bodies 30, 31 are not limited to a plate-shaped member as long as the pair of frame bodies 30, 31 have a shape allowing the intermediate supports 20 and the linear movement guide portions 40 to be attached and supported.

The linear movement guide portions 40 are tubular members that move in the up-down direction along the shaft 41 by being externally mounted on the shaft 41, and a pair of upper and lower linear movement guide portions 40 are provided similarly to the intermediate supports 20.

The linear movement guide portions 40 include outer tubes that are a pair of tubular members that the shaft 41 extending parallel to the screw shaft 11 penetrates and are attached to the pair of frame bodies 30, 31, respectively, and linear ball bearings, which are not shown, in which a plurality of balls, which are not shown, are arranged and held in the axial direction on inner peripheral surfaces of the outer tubes. Accordingly, the linear movement guide portions 40 smoothly move up and down along the shaft 41.

Two end portions of the shaft 41 are supported by the upper base plate 2 and the lower base plate 3, and thereby the shaft 41 extends in the vertical direction parallel to the screw shaft 11 and is arranged side by side with the screw shaft 11 in a left-right direction. Similar to the screw shaft 11, the shaft 41 is inserted through the pair of upper and lower frame bodies 30, 31.

The two end portions of the shaft 41 are fixed to the upper base plate 2 and the lower base plate 3, and do not axially rotate like the screw shaft 11.

As described above, the pair of upper and lower linear movement guide portions 40 smoothly move up and down along the shaft 41 disposed parallel to the screw shaft 11. At this time, the upper linear movement guide portion 40 is connected to the upper intermediate support 20 through the upper frame body 30, and the lower linear movement guide portion 40 is connected to the lower intermediate support 20 through the lower frame body 31.

That is, by guiding the linear movement guide portions 40 attached to the pair of frame bodies 30, 31 to move up and down along the shaft 41, the intermediate supports 20 through which the screw shaft 11 is inserted with a clearance between the intermediate supports 20 and the outer peripheral surface of the screw shaft 11 can be guided to move up and down along the screw shaft 11 while maintaining this state.

In the pair of buffer devices 50, 51, the buffer device 50 is provided between the upper base plate 2 and the upper frame body 30, and the buffer device 51 is provided between the lower base plate 3 and the lower frame body 31. In particular, the lower buffer device 51 elastically supports a lower surface of the frame body 31 that moves up and down along the shaft 41 (screw shaft 11), thereby preventing the pair of intermediate supports 20, 20 from falling downward by a predetermined amount or more. The lower buffer device 51 may support the lower intermediate support 20 or the lower linear movement guide portion 40 from below.

Accordingly, the buffer devices 50, 51 can prevent the pair of frame bodies 30, 31, which integrally move up and down by being integrally coupled by the coupling member 33, from vigorously colliding with the upper base plate 2 or the lower base plate 3.

The buffer devices 50, 51 may be an air cylinder, a hydraulic cylinder, or damper members each including an elastic member, and may also be buffer members each including an elastic member, as long as the frame bodies 30, 31 can be prevented from vigorously colliding with the upper and lower base plates 2, 3.

In addition, the buffer devices 50, 51 may be used together with a tension spring or a constant load spring, which is not shown, provided to offset a weight of the frame bodies 30, 31, and thereby positions of the frame bodies 30, 31 in a state in which the nut 12 does not operate are maintained at a center in the axial direction of the screw shaft 11.

### (Operation and Effect)

When the ball screw 10 is driven by the drive motor 60 and the screw shaft 11 axially rotates in a predetermined direction, the nut 12 moves up or down along the screw shaft 11. At this time, when an inter-fulcrum distance of the screw shaft 11 is long, a value of a critical speed u inversely proportional to a square of the inter-fulcrum distance is small, and thus resonance may occur even when a rotational speed of the screw shaft 11 is relatively low.

On the other hand, by the resonance prevention device 100 according to the present embodiment, the pair of intermediate supports 20 that are held in a state of being separated by the inter-fulcrum distance L1 for suppression are provided on upper and lower sides of the nut 12. The intermediate supports 20 are configured such that the inner peripheral surfaces come into contact with the outer peripheral surface of the screw shaft 11 to serve as contact points (fulcrums) when the screw shaft 11 starts resonance of a predetermined amplitude or more.

Accordingly, when resonance occurs in the screw shaft 11, the inter-fulcrum distance is shortened from the normal inter-fulcrum distance L to an inter-fulcrum distance L1 for suppression, and thus the value of the critical speed u is significantly increased, and the screw shaft 11 is less likely to resonate. That is, the feed screw device 1 provided with the resonance prevention device 100 can be used at a rotational speed exceeding a rotational speed that could not be allowed by a standard-specification ball screw 10.

Specifically, the pair of intermediate supports 20 are integrally coupled by the frame bodies 30, 31 and the coupling member 33, and are connected, through the frame bodies 30, 31, to the linear movement guide portions 40 that move along the shaft 41 parallel to the screw shaft 11.

Accordingly, when the screw shaft 11 does not resonate, the intermediate supports 20 move up and down along the screw shaft 11 in a non-contact state in which a clearance is defined between the inner peripheral surfaces of the intermediate supports 20 and the outer peripheral surface of the screw shaft 11.

On the other hand, when the rotational speed of the screw shaft 11 increases and resonance occurs at a predetermined amplitude or more, the inner peripheral surfaces of the intermediate supports 20 and the outer peripheral surface of the screw shaft 11 come into contact with each other, and the intermediate supports 20 serve as fulcrums for pressing the screw shaft 11. Accordingly, the inter-fulcrum distance automatically decreases from the distance between the upper and lower base plates 2, 3 to the distance between the pair of intermediate supports 20.

According to this configuration, since the pair of intermediate supports 20, 20 come into contact with the outer peripheral surface of the screw shaft 11 only when the screw shaft 11 resonates, the pair of intermediate supports 20, 20 do not come into contact with the screw shaft 11 or hinder movement of the nut 12 when the screw shaft 11 does not resonate.

A configuration in which the intermediate supports 20 move will be described with reference to FIGS. 1 and 2.

The resonance prevention device 100 has a first state in which the nut 12 that moves up and down along the screw shaft 11 is in contact with the upper intermediate support 20 and moves up and down together with the pair of intermediate supports 20, 20 and the pair of frame bodies 30, 31 as shown in FIG. 1, and a second state in which the nut 12 is not in contact with the upper intermediate support 20 as shown in FIG. 2.

In the first state shown in FIG. 1, the nut 12 moves up and down along the screw shaft 11 while supporting the upper intermediate support 20 from below. According to this configuration, since the intermediate supports 20 and the frame bodies 30, 31 move in synchronization with the nut 12 until a lower surface of the lower frame body 31 approaches the lower buffer device 51 and is supported from below thereby (until switched to the second state), positions of support points at which the screw shaft 11 is supported by the intermediate supports 20 can be automatically optimized.

As shown in FIG. 2, in the second state, when the lower intermediate support 20 and the frame body 31 are supported from below by the lower buffer device 51, no load is applied to the nut 12, and thus the movement of the nut 12 becomes smoother.

Further, the pair of buffer devices 50, 51 can reliably prevent the intermediate supports 20 and the frame bodies 30, 31 supporting the intermediate supports 20 from forcefully colliding with the upper base plate 2 and the lower base plate 3.

In the present embodiment, since the screw shaft 11 extends in the vertical direction, a member for supporting the screw shaft 11 against deflection is not necessary, and thus the buffer devices 50, 51 that support the screw shaft 11 and the intermediate supports 20 can be simple and inexpensive.

### (Second Embodiment)

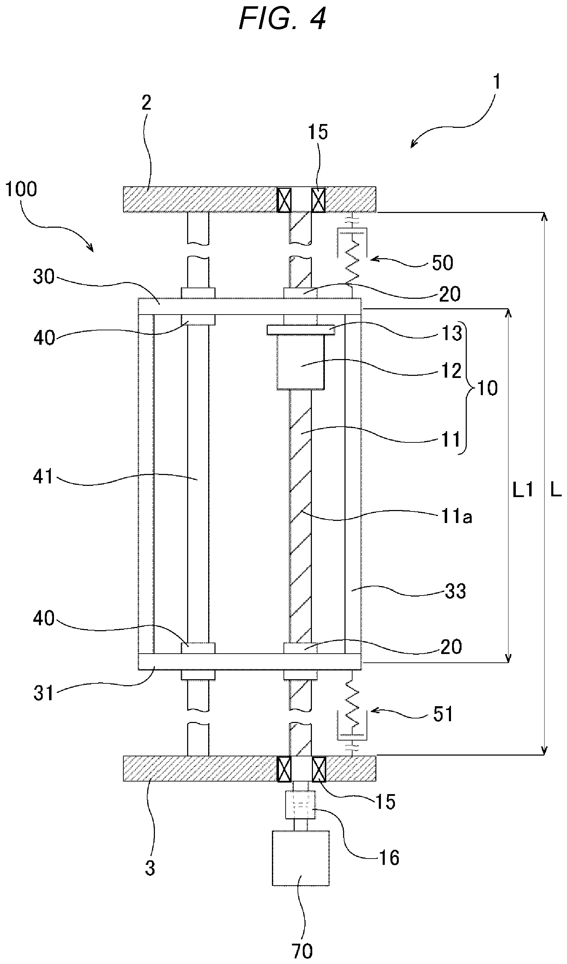

Next, the feed screw device 1 according to the second embodiment will be described with reference to FIG. 4. FIG. 4 shows the feed screw device according to the second embodiment.

Instead of the drive motor 60, a generator 70 is provided at an end portion (lower end in the shown example) of the screw shaft 11 via the coupling 16.

The nut 12 is provided with a float or the like (not shown) that floats on the sea.

According to this configuration, the feed screw device 1 can be applied to wave power generation.

Specifically, the feed screw device 1 according to the present embodiment installed on the sea can axially rotate the screw shaft 11 by moving the nut 12 on the sea up and down along the screw shaft 11 by up-down movement of waves, and thus can generate power by inputting rotational movement of the screw shaft 11 to the generator 70.

Due to characteristics of the waves, the ball screw 10 requires a long stroke and high-speed rotation, and the up-down movement of the nut 12 is unsteady due to the waves. However, according to the present embodiment, upper and lower positions of the frame bodies 30, 31 that support the intermediate supports 20 can be automatically optimized in accordance with the movement of the waves. Further, even when there is a sudden change in the waves, the buffer devices 50, 51 can prevent the intermediate supports 20 from coming into contact with the upper and lower base plates 2, 3.

The present invention is not limited to the above embodiments and can be appropriately modified, improved, and the like.

As described above, following matters are disclosed in the present specification.
(1) A feed screw device includes:
   a ball screw that includes a screw shaft, the screw shaft extending in a vertical direction and having two end portions thereof rotatably supported by an upper base portion and a lower base portion via bearings, and a nut screwed to the screw shaft via balls;
   a pair of intermediate supports located on two sides of the nut in an up-down direction, movable up and down around the screw shaft, and configured to come into contact with the screw shaft;
   a pair of frame bodies respectively attached to the pair of intermediate supports between the upper base portion and the lower base portion, and coupled by a coupling member;
   linear movement guide portions that a shaft attached to the upper base portion and the lower base portion penetrates and have a pair of outer tubes to which the pair of frame bodies are respectively attached; and
   a pair of buffer devices respectively provided between the upper base portion and the frame body located above and between the lower base portion and the frame body located below,
   in which the nut has a state in which the nut is in contact with the intermediate support or the frame body which is located above and moves in the up-down direction together with the pair of intermediate supports and the pair of frame bodies, and a state in which the nut is not in contact with the intermediate support or the frame body which is located above.
   According to this configuration, in specifications in which the screw shaft extends in the vertical direction, even when a support interval of the ball screw is large, resonance can be restricted and the ball screw can be used at a speed exceeding the critical speed.
(2) In the feed screw device according to (1),
   the pair of intermediate supports are guide bushes configured to come into contact with an outer peripheral surface of the screw shaft.
   According to this configuration, the intermediate supports can smoothly and reliably press the outer peripheral surface of the resonant screw shaft and serve as fulcrums of the screw shaft.
(3) In the feed screw device (1) or (2),
   the linear movement guide portions include a pair of linear ball bearings respectively having the pair of outer tubes.
   According to this configuration, the outer tubes are smoothly guided along the shaft, and thus movement of the intermediate supports that move up and down along the screw shaft is also stabilized.
(4) In the feed screw device according to any one of (1) to (3),

   a drive motor that is coupled via a coupling and rotationally drives the screw shaft is attached to an end portion of the screw shaft.
   According to this configuration, a position of the nut that moves along the screw shaft can be controlled by controlling movement of the drive motor.
(5) In the feed screw device according to any one of (1) to (3),
   a generator that is coupled via a coupling is attached to an end portion of the screw shaft rotationally driven by up-down movement of the nut.

According to this configuration, the feed screw device can be applied to wave power generation by converting movement of the nut that moves up and down by waves into rotational movement of the screw shaft and inputting the rotational movement of the screw shaft to the generator.

Although the embodiments are described above with reference to the drawings, it is needless to mention that the present invention is not limited to these examples. It is apparent for those skilled in the art that various modifications or corrections are conceivable within the scope recited in the claims, and it is understood that the above falls within the technical scope of the present invention. In addition, components described in the above embodiments may be combined in a freely selected manner without departing from the spirit of the invention.

The present application is based on a Japanese patent application (No. 2024-14894) filed on February 2, 2024, contents of which are incorporated herein by reference.

### REFERENCE SIGNS LIST

1 feed screw device
2 upper base plate (upper base portion)
3 lower base plate (lower base portion)
11 screw shaft
11a screw groove
12 nut
13 flange portion
15 bearing
16 coupling
20 intermediate support
30 frame body
31 frame body
33 coupling member
40 linear movement guide portion
41 shaft
50 buffer device
51 buffer device
60 drive motor
70 generator
100 resonance prevention device

## Claims

1. A feed screw device comprising:
a ball screw including:
a screw shaft extending in a vertical direction and having end portions rotatably supported by an upper base portion and a lower base portion, respectively, via bearings; and
a nut screwed to the screw shaft via balls;
a pair of intermediate supports respectively located on opposite sides of the nut in an up-down direction, movable up and down around the screw shaft, and configured to come into contact with the screw shaft;
a pair of frame bodies respectively attached to the pair of intermediate supports between the upper base portion and the lower base portion, and coupled by a coupling member;
linear movement guide portions penetrated by a shaft attached to the upper base portion and the lower base portion and having a pair of outer tubes to which the pair of frame bodies are respectively attached; and
a pair of buffer devices, one of the pair of buffer devices being provided between the upper base portion and an upper one of the pair of frame bodies, and another one of the pair of buffer devices being provided between the lower base portion and a lower one of the pair of frame bodies,
wherein the nut has a state in which the nut is in contact with an upper one of the pair of intermediate supports or the upper one of the pair of frame bodies and moves in the up-down direction together with the pair of intermediate supports and the pair of frame bodies, and a state in which the nut is not in contact with the upper one of the pair of intermediate supports or the upper one of the pair of frame bodies.

2. The feed screw device according to claim 1,
wherein the pair of intermediate supports are guide bushes configured to come into contact with an outer peripheral surface of the screw shaft.

3. The feed screw device according to claim 1,
wherein the linear movement guide portions include a pair of linear ball bearings, each having a respective one of the pair of outer tubes.

4. The feed screw device according to any one of claims 1 to 3,
wherein a drive motor is provided at an end portion of the screw shaft, the drive motor being coupled to the end portion of the screw shaft via a coupling and configured to rotationally drive the screw shaft.

5. The feed screw device according to any one of claims 1 to 3,
wherein a generator is provided at an end portion of the screw shaft that is rotationally driven by up-down movement of the nut, the generator being coupled to the end portion of the screw shaft via a coupling.
